# EUROPEAN PATENT SPECIFICATION

(11) **EP 4 049 835 B1**
(45) Date of publication and mention of the grant of the patent: **01.04.2026**
(21) Application number: 21159147.4
(22) Date of filing: 25.02.2021
(51) Int. Cl.: B29C 70/20, B29C 70/44, B29C 70/54, B29D 99/00, F03D 1/06, B29L 31/08

(54) **METHOD OF MANUFACTURING A WIND TURBINE BLADE AND A PRE-IMPREGNATED SHEET THEREFOR.**
HERSTELLUNGSVERFAHREN FÜR EIN WINDTURBINENBLATT UND EINE VORIMPRÄGNIERTE SCHICHT DAFÜR.
PROCÉDÉ DE PRODUCTION D'UNE PALE D'ÉOLIENNE ET UNE COUCHE PRÉ-IMPRÉGNÉE

(43) Date of publication of application: 31.08.2022
(73) Proprietor: LM Wind Power A/S, 6000 Kolding (DK)
(72) Inventor: JØRGENSEN, Jeppe Bjørn, 6000 Kolding (DK); NIELSEN, Ole, 6000 Kolding (DK)
(74) Representative: COPA Copenhagen Patents

(56) References cited:
- EP-A1- 2 090 423
- EP-A1- 3 124 785
- EP-A2- 2 778 393
- US-A1- 2005 257 887
- US-A1- 2012 245 286
- US-A1- 2013 216 390
- US-A1- 2019 176 413

## Description

### FIELD OF INVENTION

The present invention relates to a method of manufacturing a wind turbine blade or blade shell member comprising a pre-manufactured spar cap and a number of pre-impregnated fibre sheets. The present invention also relates to a wind turbine blade or blade shell member obtainable by the methods disclosed and to a pre-impregnated fibre sheet.

### BACKGROUND OF THE INVENTION

The blades of modern wind turbines capture kinetic wind energy by using sophisticated blade design created to maximise efficiency. A major trend in wind turbine development is the increase in size to reduce the leveraged cost of energy. There is an increasing demand for large wind blades which may exceed 80 metres in length and 4 metres in width. The blades are typically made from a fibre-reinforced polymer material and comprise a pressure side shell half and a suction side shell half. The cross-sectional profile of a typical blade includes an airfoil for creating an air flow leading to a pressure difference between the two sides. The resulting lift force generates torque for producing electricity.

The shell halves of wind turbine blades are usually manufactured using blade moulds. First, a blade gel coat or primer is applied to the mould. Subsequently, fibre reinforcement material is placed into the mould in layers followed by arrangement of other elements within the shell halves, such as core elements, load-carrying spar caps, internal shear webs and the like. The resulting shell halves are resin infused and assembled by being glued or bolted together substantially along a chord plane of the blade.

The spar caps comprise a plurality of carbon pultrusion elements and interlayers arranged between the carbon pultrusion elements. The spar caps may be produced directly in the wind turbine blade moulds or in a separate offline mould where they are resin infused and then subsequently lifted into the main blade shell mould which is then infused with resin.

US 2012/245286 A1 relates to a polyurethane-forming system used to produce composites by a vacuum infusion process. This system makes it possible to produce large composites such as wind turbine blades having excellent physical properties.

US 2013/216390 A1 relates to carbon nanotube-reinforced composites produced by incorporating up to 0.7% by weight of carbon nanotubes into a liquid polymeric material. The viscosity of the carbon nanotube-containing liquid polymeric is sufficiently low that it can be used in vacuum infusion and pultrusion processes to produce large articles such as wind turbine blades.

EP 3124785 A1 relates to a rotor blade comprising a spar cap extending within the shell along a spanwise direction of the blade. The spar cap may be formed from an assembly of pre-cured laminate plates. In addition, the rotor blade may include an interior shelf positioned directly between the shell and the spar cap. The interior shelf may correspond to a pre-fabricated insert for the blade.

EP 2778393 A2 relates to a wind turbine blade comprising a spar cap positioned in the gap region of the core element where the spar cap comprises a first core ramp positioned on a first side of the spar cap between the core element and the inner layer and a second core ramp positioned on a second side of the spar cap, opposite the first side, between the core element and the first inner layer.

Different combinations of resins may be used for the spar cap and the main blade shell. It is very important to ensure a sufficiently strong adhesion between the shell and the pre-manufactured spar cap since bonding of resin onto the spar cap is crucial for the structural integrity of the blade. Vinyl ester or epoxy ester resins have good adherence properties and are often used, whereas other resins, such as polyester resin, have an attractive price. However, the adhesion properties of polyester resin are low compared to vinyl ester and epoxy resin.

The use of a primer on the spar cap increases the adherence properties at the resin interface between the spar cap and remaining parts of the blade shell member. Although the primer enhances the adhesion, it is not easy to apply and control.

Where the spar cap is made offline, primer may be applied to all surfaces of the spar cap before it is placed in the blade mould. However, to apply primer on all surfaces of the pre-manufactured spar cap before it is placed in the blade mould is challenging for several reasons. In practice, it is especially hard to apply the primer on the bottom of the pre-manufactured spar cap since the spar cap needs to be turned upside down to be able to apply primer to the bottom surface. Secondly, the spar cap needs to be lifted onto the blade mould after application of primer. To lift the spar cap, a sling may be arranged around the spar cap. However, the sling may damage some of the primed surfaces during lifting and thus decrease the adherence and strength of the finished structure. Furthermore, the primer may be based on isocyanate chemistry and react with moisture. Thus, its effect is reduced over time, especially at high humidities. Thus, the time from application of the first primer layer to the time of resin infusion is critical, and a prolonged processing time may affect the primer properties and the structural integrity of the blade.

Hence, improved methods to ensure a sufficiently strong adhesion between the shell member parts and the pre-manufactured spar cap would be advantageous.

### SUMMARY OF DISCLOSURE

It is an object of the present disclosure to provide an improved method of manufacturing a blade shell member and wind turbine blade comprising a pre-manufactured spar cap resulting in a blade shell member or wind turbine blade having sufficiently strong adhesion between the blade shell member parts and the pre-manufactured spar cap and a reduced manufacturing time, particularly when the pre-manufactured spar cap is resin infused with vinyl ester or epoxy resin and the blade mould is resin infused with polyester.

The present inventors have found that one or more of said objects may be achieved by arranging a pre-impregnated fibre sheet according to a first aspect of the present invention at the interface between the pre-manufactured spar cap and the remaining parts of the blade shell member.

According to the first aspect, the present invention relates to a blade shell member for a wind turbine blade comprising a pre-manufactured spar cap and a pre-impregnated fibre sheet as defined in claim 1. The pre-impregnated fibre sheet extends in a longitudinal direction and in a transverse direction and comprises a first fibre layer forming part of an upper surface of the pre-impregnated fibre sheet and a second fibre layer forming part of a lower surface of the pre-impregnated fibre sheet, wherein the first fibre layer comprises a first plurality of fibres arranged along a first fibre direction and the second fibre layer comprises a second plurality of fibres arranged along a second fibre direction, wherein the arrangement of the first plurality of fibres and the arrangement of the second plurality of fibres are maintained in the pre-impregnated fibre sheet relative to each other by a plurality of stitching rows and wherein the first fibre layer is pre-impregnated with an adhesion promoter. Preferably, the second fibre layer is not pre-impregnated with the adhesion promoter.

The pre-impregnated fibre sheet is arranged at the interface between the pre-manufactured spar cap and the remaining blade shell member parts, with the pre-impregnated fibre layer, i.e. the first fibre layer facing the spar cap and the second fibre layer facing the remaining blade shell member parts. The first fibre layer comprising the adhesion promoter will then facilitate adherence between the spar cap and the pre-impregnated fibre sheet, whereas the second fibre layer can easily adhere to the remaining blade shell member parts during resin infusion. Preferably, the pre-impregnated fibre sheet is a biaxial glass fibre sheet. Thus, by arranging the pre-impregnated fibre sheet at the interface between the spar cap and the blade shell members, the problem of adherence between the blade shell members and the spar cap is avoided.

As used herein, the term "adhesion promoter" is intended to encompass any compound or group of compounds that facilitates permanent contact between the pre-manufactured spar cap and the remaining parts of the blade shell member.

In some embodiments, the adhesion promoter is anything that positively influences the adhesion step between the between the pre-manufactured spar cap and the remaining parts of the blade shell member. In some embodiments, the adhesion promoter facilitates the resin flow/wetting of the pre-impregnated fibre sheet. In some embodiments, adhesion promoter makes the chemical bonding between the pre-manufactured spar cap and the remaining parts of the blade shell member faster and/or stronger.

In some embodiments, the adhesion promoter acts by forming an at least partial attractive force on a molecular or atomic level between the pre-manufactured spar cap and the remaining parts of the blade shell member. Examples of attractive forces include covalent bonds, polar covalent bonds, ionic bonds, hydrogen bonds, electrostatic attractions, hydrophobic interactions, and van der Waals attractions. That is, a functionality on an adhesion promoter group can form an attractive interaction with a functionality on the remaining parts of the blade shell member.

In some embodiments, the adhesion promoter comprises chemicals that act at the interface between the pre-manufactured spar cap and the remaining parts of the blade shell member to chemically and physically wed these dissimilar materials into a strong cohesive bond structure.

In some embodiments, the adhesion promoter comprise chemical materials that contain dual functionality in the molecular structure. A metallic central atom, such as silicon, zirconium, titanium, aluminum, or others, will give inorganic reactivity to the adhesion promoter, especially if methoxy, ethoxy, or hydroxyl groups are attached to the metal atom. An organofunctional group can also be attached to the metal atom through an alkylene, arylene, or other type of organic bridge, to give traditional organic reactivity to the adhesion promoter. The inorganic reactive groups can condense with themselves to give the adhesion promoter an oligomeric structure. An oligomeric adhesion promoter has dual- or multi-functionality and structural integrity, such that a stable chemical bond occurs between the dissimilar organic and inorganic surfaces to promote adhesion between the two dissimilar materials. This basic concept of the chemistry and action of adhesion promoters has allowed great advances in reinforced plastics, adhesive bonding, and compatibilization of different materials in a wide variety of applications.

In some embodiments, the adhesion promoter include reactive organic oligomers or polymers, such as thermoplastics polymers (polyethylene, polypropylene, etc.) grafted with organofunctional groups. The adhesion promoter may include block copolymers that function by having polymeric segments with solubility parameters that are matched to the components in order to be adhered or compatibilized and function by atomic interactions of van der Waals, dipole interaction, and other atomic forces. Organosilane coupling agents are a predominant chemical type of adhesion promoter.

In some embodiments, the adhesion promoter is a powder. In some embodiments, the adhesion promoter is a liquid solution.

In some embodiments, the adhesion promoter is compatible with polyester resin and/or epoxy ester resin and/or vinyl ester resin. In some embodiments, the adhesion promoter is a primer and/or is isocyanate based and/or silane based and/or acrylate based and/or urethane based. A suitable adhesion promoter would be SIKA215. SIKA215 is urethane and isocyanate based.

The adhesion promoter may be based on reactive silanes containing both organofunctional and hydrolyzable groups. These silanes are added at about 0.2-3% by weight, based on the total formulation in order to achieve self-priming adhesion characteristics. Upon cure, the adhesion promoter participates in the cross-linking reactions, but also establishes bonds between the silicone network and the substrate. All the art and technology of a self-priming polymeric system resides in the choice and chemical design of the adhesion promoter molecules. Silane coupling agents are denoted by the general structure RSiX₃, where R is a reactive organofunctional group and X is a hydrolyzable group, such as a methoxy, ethoxy or acetoxy group. the variety of different organosilanes and their respective merits have been discussed in detail elsewhere. Organosilanes are small, surface-active molecules, which easily can diffuse to the interface at the same time that cross-linking occurs in the bulk of the silicone composition. once at the interface, they can improve adhesion through enhanced wetting and covalent bonding. hydrolysis of the organosilane provides active silanol sites for hydrogen bonding. The silanol groups on the organosilane allow condensation reactions to occur, which result in the formation of Si-O-Si bonds between the silane molecule and the silicon-containing surface as well as the silicone network. It also is possible for the organofunctional group on the silane to react with chemical reactive groups present in the substrate surface. Silanes are particularly effective in the promotion of adhesion of silicones to metal, glass and siliceous surfaces in general. A recent study has shown that specific mixtures of silanes can provide better adhesive performance than the separate silanes and that an optimum composition is required. Suitable classes of adhesion promoters for condensation-cure rtV systems are functional silanes bearing aminoalkyl, mercaptoalkyl, epoxyalkyl, ureidoalkyl, acrylate and isocyanurate groups. Within these classes, the commercially most important adhesion promoters are aminopropyltriethoxysilane, aminoethylaminopropyltrimethoxysilane and glycidoxypropyltrimethoxysilane. novel and more complex adhesion promoter systems are continually being developed to respond to the demands of emerging and future sealing and bonding technologies.

The first fibre layer comprises a first plurality of fibres arranged along a first fibre direction, and the second fibre layer comprises a second plurality of fibres arranged along a second fibre direction.

In some embodiments, the first and second fibre directions are different.

In some embodiments, a fibre angle between the first and second fibre directions is between 40 degrees and 150 degrees, preferably 90 degrees.

The arrangement of the first plurality of fibres and the arrangement of the second plurality of fibres are maintained relative to each other in the pre-impregnated fibre sheet by a plurality of stitching rows.

In some embodiments, the plurality of stitching rows is parallel and arranged along a first stitch direction.

In some embodiments, the first stitch direction is between the first and second fibre directions, such as half the fibre angle from each of the first and second fibre directions.

In some embodiments, the first and/or second plurality of fibres comprises or essentially consists of glass fibres.

In some embodiments, the first and second fibre layers are arranged on top of each other, i.e. being in contact with each other.

In preferred embodiments, the pre-impregnated fibre sheet is a biaxial glass-fibre sheet, wherein the first and second fibre directions are each arranged at a 45-degree angle relative to a longitudinal direction of the pre-impregnated fibre sheet, the fibre angle between the first and second fibre directions is 90 degrees, and the first stitch direction is parallel with the longitudinal direction of the pre-impregnated fibre sheet.

In some embodiments, the pre-impregnated fibre sheet further comprises at least one further fibre layer, such as a third fibre layer and/or a fourth fibre layer etc., arranged between the first and second fibre layers and each comprising a plurality of fibres arranged along a third, fourth etc. fibre direction, which may be the same or different between these fibre layers and/or the same or different from the first and/or second fibre directions.

In some embodiments, the adhesion promoter is applied to the upper surface of the pre-impregnated fibre sheet i.e. to the first fibre layer by brushing and/or rolling and/or spraying it on the first fibre layer. In some embodiments, the adhesion promoter is applied to the first fibre layer by using a spray gun, such as a long-reach spray gun.

In some embodiments, the first plurality of fibres of the first fibre layer is coated by an adhesion promoter e.g. by dipping the first plurality of fibres in a bath comprising the adhesion promoter, before the fibres are stitched together with the second plurality of fibres to provide the pre-impregnated fibre sheet.

In some embodiments, the adhesion promoter is dried and/or heated after application to the first plurality of fibres or the first fibre layer of the pre-impregnated fibre sheet.

In some embodiments, the upper surface of the pre-impregnated fibre sheet comprising the first fibre layer is covered by a removable film. In this way, the sheet can be rolled up along the longitudinal direction and be stored in a compact configuration. The film allows the pre-impregnated fibre sheet to be rolled up upon itself, without the first fibre layer comprising the adhesion promoter getting in direct contact with the second fibre layer.

Preferably, the pre-impregnated fibre sheet is configured to have at least the same length as a pre-manufactured spar cap and substantially the same width. Thus, the rolled-up pre-impregnated fibre sheet can easily be rolled out over the entire length of the spar cap. Depending on how the first fibre layer is arranged, i.e. whether it is arranged to face the surface onto which it is rolled out or not, the film covering the upper surface of the first fibre layer can be removed substantially simultaneously with or after the pre-impregnated fibre sheet is rolled out. In case the pre-impregnated fibre sheet is arranged such that the first fibre layer faces the surface onto which it is rolled out, the film should be removed substantially simultaneously with the pre-impregnated fibre sheet being rolled out. However, in case the pre-impregnated fibre sheet is arranged such that the second fibre layer faces the surface onto which the pre-impregnated fibre sheet is rolled out, the film may be removed substantially simultaneously with or after the pre-impregnated fibre sheet being rolled out.

In a second aspect, the present invention relates to a method of manufacturing a blade shell member for a wind turbine blade as defined in claim 7.

Since the pre-impregnated fibre sheet has two connected layers with two different properties, one facilitating adherence to the pre-manufactured spar cap and one facilitating adherence to the remaining blade shell member parts during resin infusion, the pre-impregnated fibre sheet facilitates adhesion between the pre-manufactured spar cap and the remaining blade shell member parts. Furthermore, the pre-impregnated fibre sheet increases the fracture toughness of the blade shell member. If the pre-impregnated fibre sheet is designed with a low cohesive strength but a high fracture toughness, an emerging interface crack will always seek to propagate into the pre-impregnated fibre sheet where the crack ideally will arrest or at least slow down in propagation speed. Thus, the pre-impregnated fibre sheet will take over the toughening mechanism and thereby increase the overall fracture toughness of the blade shell member. In this way, sufficient adherence and strength of the blade shell member are obtained. This is especially advantageous, if the pre-manufactured spar cap and the blade shell member are infused with different types of resin.

Also, by arranging the first pre-impregnated fibre sheet on top of the fibre-reinforced layers at the predetermined spar cap region, before arranging the pre-manufactured spar cap in the blade mould, application of primer on the bottom of the pre-manufactured spar cap can be avoided. In this way, it is not necessary to turn the spar cap upside down to be able to apply a primer layer to the bottom surface. Furthermore, damage to the primer layer during lifting of the pre-manufactured spar cap from a preparation station to the blade mould is avoided. In this way, improved adherence properties and strength of the finished structure can be obtained.

Furthermore, by arranging the second pre-impregnated fibre sheet on top of the upper surface of the pre-manufactured spar cap, either before or after arranging the spar cap on the spar cap region, primer application may be avoided altogether. For example, arrangement of the second pre-impregnated fibre sheet on the upper surface of the pre-manufactured spar cap may be performed simultaneously with arrangement of the first pre-impregnated fibre sheet to the spar cap region, and the pre-manufactured spar cap may be arranged on the blade mould immediately after, hereby decreasing overall manufacturing time.

In some embodiments, the method further comprises the step of applying a primer layer to at least part of the spar cap region before step e). In such embodiments, the method comprises the step of arranging the second pre-impregnated fibre sheet on at least part of the upper surface of the pre-manufactured spar cap before step f) and preferably after step e), but there is no need for the first pre-impregnated fibre sheet.

In some embodiments, the method further comprises the step of applying a primer layer to at least part of the upper surface of the pre-manufactured spar cap before step f). In such embodiments, the method comprises a step of arranging the first pre-impregnated fibre sheet on top of the number of fibre-reinforced layers on at least part of the spar cap region before step e), but there is no need for the second pre-impregnated fibre sheet.

In some embodiments, the primer layer is applied by brushing and/or rolling and/or spraying. In some embodiments, the primer layer is applied by using a spray gun, such as a long-reach spray gun. The primer layer may be applied from the walkway on the side of the blade mould. This will minimise any damage to the materials in the blade mould.

The primer may be applied in the form of a powder or as a solution comprising primer. In some embodiments, the primer layer comprises or consists of SIKA215 primer. The primer layer may be a uniform layer or be an uneven layer, where some parts of the spar cap region or upper surface of the pre-manufactured spar cap comprise primer and other parts comprise less primer or no primer at all.

The spar cap region is to be understood as a region relative to the moulding surface, where the pre-manufactured spar cap is to be arranged. However, the spar cap region is not to be understood as an area of the moulding surface, since the pre-manufactured spar cap is to be arranged on the fibre-reinforced layers arranged on the moulding surface. The spar cap region preferably has the same size as the lower surface of the pre-manufactured spar cap. In some embodiments, the pre-impregnated fibre sheets or primer layers are arranged on or applied to the entire spar cap region or upper surface of the pre-manufactured spar cap. In some embodiments, the pre-impregnated fibre sheets or primer layers are arranged on or applied on one or more areas of the spar cap region or upper surface of the pre-manufactured spar cap, but not on the entire area. In preferred embodiments, the first and/ or second pre-impregnated fibre sheet extends beyond the spar cap region and/or upper surface of the pre-manufactured spar cap e.g. it is wider than the spar cap region. This is advantageous as the pre-impregnated fibre sheets then further reinforce the transition between the pre-manufactured spar cap and remaining blade shell member parts, particularly when the pre-impregnated fibre sheets are biaxial glass fibre sheets, since biaxial glass fibre sheets can carry load transversely across the weak connection between the pre-manufactured spar cap and remaining blade shell member parts.

In some embodiments, the number of pre-impregnated fibre sheets comprises a plurality of first pre-impregnated fibre sheets and a plurality of second pre-impregnated fibre sheets, wherein the plurality of first pre-impregnated fibre sheets arranged such that they together cover substantially the entire pre-determined spar cap region and wherein the plurality of second pre-impregnated fibre sheets are arranged such that they together cover substantially the entire upper surface of the pre-manufactured spar cap.

A pre-impregnated fibre sheet or a primer layer may further be applied to the side surfaces and/or end surfaces of the pre-manufactured spar cap. If done, the pre-impregnated fibre sheets or primer layers may be applied to the pre-manufactured spar cap before or after it is arranged in the blade mould. Depending on the method of lifting the pre-manufactured spar cap from a preparation table to the blade mould, it may be advantageous to arrange the pre-impregnated fibre sheets or apply the primer layers after arranging the pre-manufactured spar cap in the blade mould to avoid damages during lifting and to improve the access to the sides and surfaces of the pre-manufactured spar cap.

In some embodiments, the first and/or pre-impregnated fibre sheets are provided in a rolled-up configuration and the upper surface of the pre-impregnated fibre sheets, i.e. the first fibre layer, is covered by a removable film. In such embodiments, the step of arranging the first pre-impregnated fibre sheet and/or second pre-impregnated fibre sheet comprises removing the film while rolling out the pre-impregnated fibre sheets.

In some embodiments, the step of arranging the number of fibre-reinforced layers on the blade moulding surface comprises arranging each of the number of fibre-reinforced layers on top of each other. The fibre-reinforced layers arranged on the blade moulding surface will become the outer shell of the blade shell member. Thus, preferably the fibre-reinforced layers should cover the entire moulding surface. The number of fibre-reinforced layers are between 1-100, preferably between 5-50, such as between 10-40.

In some embodiments, the step of arranging the number of fibre-reinforced layers on the blade moulding surface comprises arranging a plurality of preforms, each comprising a consolidated stack of fibre-reinforced layers, on the moulding surface. Preferably, the plurality of preforms together covers the entire moulding surface. The use of preforms may be advantageous, especially when manufacturing very large blade shell members, since wrinkles in the fibre-reinforced layers may be reduced.

In some embodiments, the method further comprises arranging further fibre-reinforced layers in the blade mould, including arranging further fibre-reinforced layers on top of the second pre-impregnated sheet, before step f) and after step e), such that the further fibre-reinforced layers are contacted with the second fibre layer of the second pre-impregnated sheet.

In some embodiments, the number of fibre-reinforced layers and further fibre-reinforced layers comprises glass fibres and/or carbon fibres. In some embodiments, the number of fibre-reinforced layers and further fibre-reinforced layers comprises unidirectional layers and/or biaxial layers and/or triaxial layers.

In some embodiments, the method further comprises the step of arranging further blade shell member parts, such as sandwich core layers and/or shear webs in the blade mould cavity. The blade shell member parts referred to herein include all parts of the blade shell member.

In some embodiments, providing the pre-manufactured spar cap comprises the steps of:
c1) providing a plurality of pultruded carbon elements and a number of interlayers comprising fibre material for promoting resin flow between the pultruded carbon elements;
c2) arranging the plurality of pultruded carbon elements in a stacked array, wherein the plurality of pultruded carbon elements is separated by the number of interlayers; and
c5) infusing the plurality of pultruded carbon elements with resin and curing to provide the pre-manufactured spar cap.

The pre-manufactured spar cap is preferably an elongated element having an upper surface, a lower surface, a first side surface, a second side surface, a first end surface and a second end surface. The upper surface and lower surface are preferably arranged opposite each other and may have substantially the same sizes. In the same way, the first and second side surfaces may be arranged opposite each other and have substantially the same sizes, and the first and second end surfaces are arranged opposite each other and preferably have substantially the same sizes. However, since the shape of the spar cap is set according to strength requirements, the thickness may change along the longitudinal direction of the spar cap, resulting in tapering sections at the sides and/or the ends.

The pultruded carbon elements are preferably elongated planks with a rectangular cross-section and made from carbon fibres or glass fibres in a cured resin. Alternatively, they may be hybrid pultrusion elements further comprising a second type of reinforcement fibres, such as glass fibres. The interlayers comprise fibre material, such as glass fibres, carbon fibres or polymeric fibres etc. for promoting resin flow between the pultruded carbon planks.

In some embodiments, the pre-manufactured spar cap is infused with vinyl ester or epoxy ester resin to connect the pultruded carbon elements. Preferably, the blade mould cavity is infused with polyester resin.

Polyester resin is much cheaper than conventionally used resins, such as epoxy ester and vinyl ester. However, the fracture resistance of polyester-infused blade shell member parts is significantly lower than the fracture toughness of a vinyl ester or epoxy ester infused blade shell member. The adherence properties and strength of the pre-manufactured spar cap are particularly important. Thus, even though the prices of vinyl ester or epoxy ester are high compared to other resins, these are preferred for the pre-manufactured spar cap. By primarily using polyester resin for the remaining blade shell member and only using vinyl ester or epoxy ester resin for a few parts, such as the pre-manufactured spar cap, the costs of the blade shell member can be greatly reduced. Recent testing shows that the fracture toughness at the interface between a pre-manufactured spar cap infused with vinyl ester resin and the remaining blade shell member part infused with polyester resin is low. Furthermore, the fracture resistance of the polyester infused blade shell member parts is significantly lower than the fracture toughness of the vinyl ester or epoxy ester spar cap. Therefore, any cracks starting at the interface will probably propagate into the interface or kink into the polyester infused blade shell member parts having a lower fracture toughness than the vinyl ester or epoxy ester spar cap. However, with the arrangement of the pre-impregnated fibre sheet as disclosed herein at the interface between pre-manufactured spar cap and the remaining blade shell member parts, the fracture toughness at the vinyl ester resin/polyester resin interface can be increased. Furthermore, the use of a pre-impregnated layer increases the fracture toughness of the polyester-infused blade shell member itself, meaning that if a crack starts at the interface it may arrest if it tries to propagate into the pre-impregnated fibre sheet. If the pre-impregnated fibre sheet is designed with a low cohesive strength but a high fracture toughness, then the interface crack will always seek to propagate into the pre-impregnated fibre sheet where the crack ideally will arrest or at least slow down in propagation speed. Thus, the pre-impregnated fibre sheet will take over the toughening mechanism and thereby increase the overall fracture toughness of the blade shell member. In this way, sufficient adherence and strength of the blade shell member are obtained at a reduced price by using a pre-impregnated sheet according to the present invention.

In some embodiments, the step of infusing the blade mould cavity with resin is based on vacuum-assisted resin transfer moulding (VARMT). When the desired elements have been arranged in the blade mould, a vacuum bag may be arranged on top of the elements arranged on the moulding surface, and the vacuum bag may be sealed against the blade mould. Then, the blade mould cavity within the sealed vacuum bag may be infused with resin. Optionally, the step of resin infusion is followed by curing to obtain the finished blade shell member.

The method for providing a blade shell member may be for providing a suction side shell member or a pressure side shell member. It is to be understood that the same method may be used for providing a suction side shell member as well as a pressure side shell member. The only difference between providing the pressure side shell member and the suction side shell member would be the shape of the blade mould.

In a third aspect, the present disclosure relates to a wind turbine blade obtainable by manufacturing a pressure side shell half and a suction side shell half over substantially the entire length of the wind turbine blade in accordance with any of claims 7-12 and subsequently closing and joining the shell halves for obtaining a closed shell.

In a fourth aspect, the present disclosure relates to a blade shell member for a wind turbine blade obtainable by the method of any of claims 7-12.

It will be understood that any of the above-described features may be combined in any embodiment of the invention. In particular, embodiments described with regard to the method of manufacturing a blade shell member may also apply to the method of manufacturing a wind turbine blade or a wind turbine and vice versa. Furthermore, embodiments described with regard to the pre-impregnated fibre sheet may also be applied to the method of manufacturing a blade shell member or wind turbine blade.

### DETAILED DESCRIPTION OF THE INVENTION

The invention is explained in detail below with reference to embodiments shown in the drawings, which shall not be construed as limitations.
Fig. 1 is a schematic diagram illustrating a wind turbine,
Fig. 2 is a schematic diagram illustrating a wind turbine blade and a spar cap structure arranged within the wind turbine blade,
Fig. 3 is a schematic diagram illustrating a pre-manufactured spar arranged on a preparation table and in a sling according to an embodiment of the present invention. Furthermore, part of a blade mould and a spar cap region are illustrated.
Fig. 4 is a schematic diagram illustrating different views of a pre-impregnated fibre sheet according to a preferred embodiment of the present invention,
Fig. 5 is a schematic diagram illustrating a cross-sectional view of the blade mould of Fig. 3 and method steps of providing a blade shell member according to embodiments of the present invention,
Fig. 6 is a schematic diagram illustrating a close-up view of a first and second pre-impregnated sheet arranged at the interface between a pre-manufactured spar cap and the remaining blade shell member parts,
   and
Fig. 7 is a schematic diagram illustrating a pre-impregnated fibre sheet arranged in different rolled-up configurations.

### DETAILED DESCRIPTION

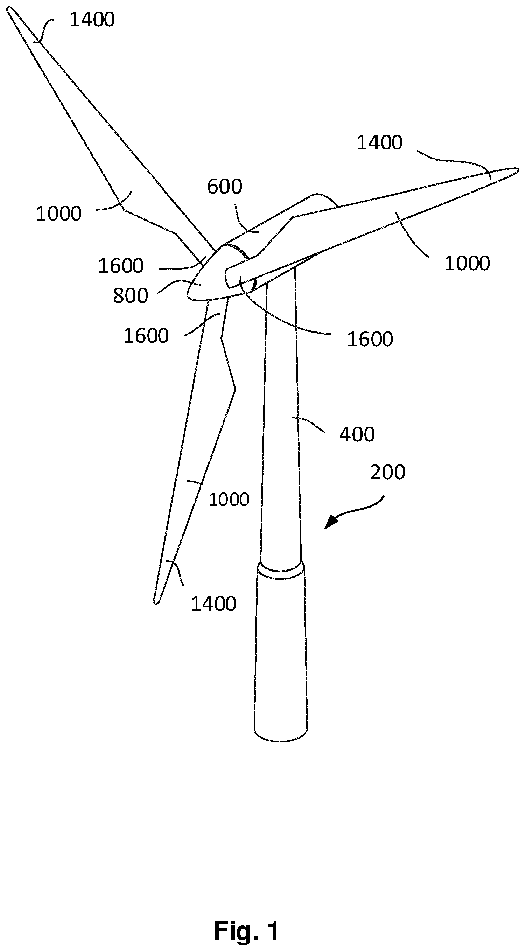

Fig. 1 illustrates a conventional modern upwind wind turbine according to the so-called "Danish concept" with a tower 400, a nacelle 600 and a rotor with a substantially horizontal rotor shaft. The rotor includes a hub 800 and three blades 1000 extending radially from the hub 800, each having a blade root 1600 nearest the hub and a blade tip 1400 furthest from the hub 800.

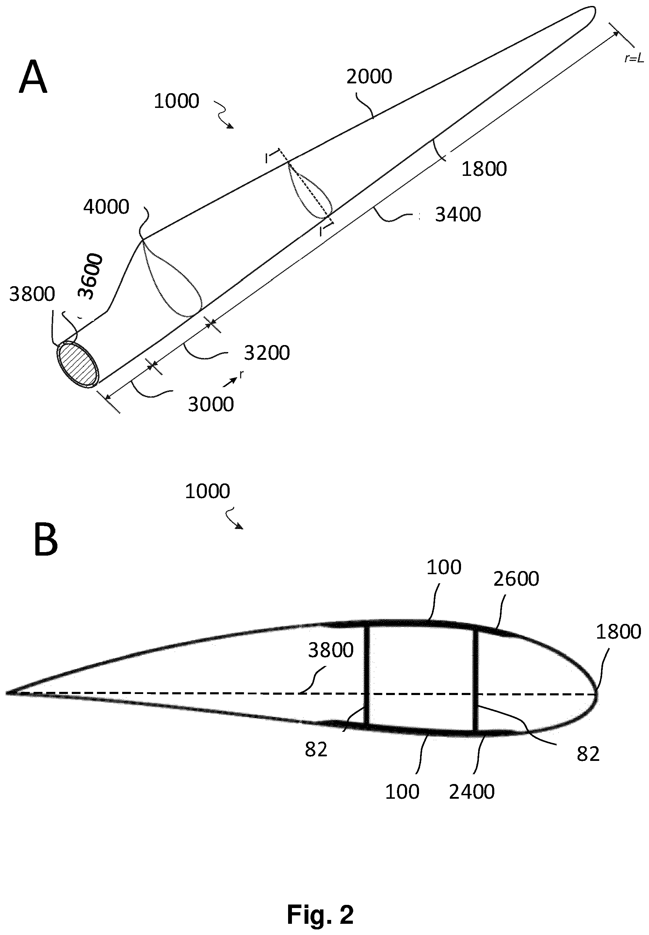

Fig. 2A shows a schematic view of a first embodiment of a wind turbine blade 1000 according to the invention. The wind turbine blade 1000 has the shape of a conventional wind turbine blade and comprises a root region 3000 closest to the hub, a profiled or an airfoil region 3400 furthest away from the hub and a transition region 3200 between the root region 3000 and the airfoil region 3400. The blade 1000 comprises a leading edge 1800 facing the direction of rotation of the blade 1000, when the blade is mounted on the hub, and a trailing edge 2000 facing the opposite direction of the leading edge 1800.

The airfoil region 3400 (also called the profiled region) has an ideal or almost ideal blade shape with respect to generating lift, whereas the root region 3000 due to structural considerations has a substantially circular or elliptical cross-section, which for instance makes it easier and safer to mount the blade 1000 to the hub. The diameter (or the chord) of the root region 3000 may be constant along the entire root region 3000. The transition region 3200 has a transitional profile gradually changing from the circular or elliptical shape of the root region 3000 to the airfoil profile of the airfoil region 3400. The chord length of the transition region 3200 typically increases with increasing distance r from the hub. The airfoil region 3400 has an airfoil profile with a chord extending between the leading edge 1800 and the trailing edge 2000 of the blade 1000. The width of the chord decreases with increasing distance *r* from the hub.

A shoulder 4000 of the blade 1000 is defined as the position where the blade 100 has its largest chord length. The shoulder 4000 is typically provided at the boundary between the transition region 3200 and the airfoil region 3400.

It should be noted that the chords of different sections of the blade normally do not lie in a common plane since the blade may be twisted and/or curved (i.e. pre-bent), thus providing the chord plane with a correspondingly twisted and/or curved course, this being most often the case in order to compensate for the local velocity of the blade being dependent on the radius from the hub.

Fig. 2B is a schematic diagram illustrating a cross-sectional view of an exemplary wind turbine blade 1000, e.g. a cross-sectional view of the airfoil region of the wind turbine blade 1000. The wind turbine blade 1000 comprises a leading edge 1800, a trailing edge 2000, a pressure side 2400, a suction side 2600, a first spar cap 100 and a second spar cap 100. The wind turbine blade 1000 comprises a chord line 3800 between the leading edge 1800 and the trailing edge 2000. The wind turbine blade 1000 comprises shear webs 82, such as a leading edge shear web and a trailing edge shear web. The shear webs 82 could alternatively be a spar box with spar sides, such as a trailing edge spar side and a leading edge spar side. The spar caps 100 may comprise carbon fibres while the rest of the shell parts 2400, 2600 may comprise glass fibres.

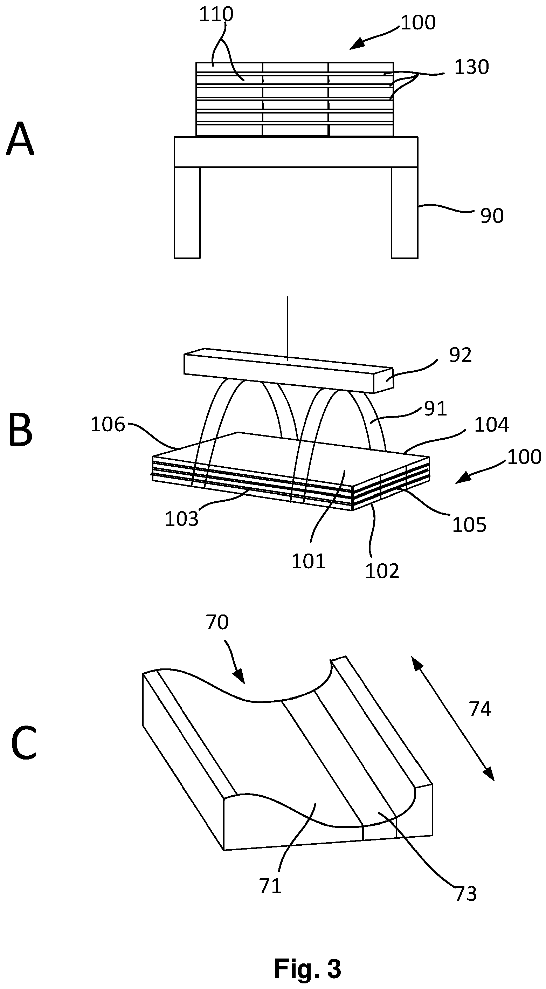

Fig. 3A is a schematic diagram illustrating a cross-sectional view along the width of a pre-manufactured spar cap 100 according to an embodiment of the present invention. In Fig. 3A, a finished pre-manufactured spar cap 100 is arranged on a preparation table 90.

Fig. 3B is a schematic diagram illustrating a three-dimensional view of the pre-manufactured spar cap 100 arranged in a sling 91 which is further coupled to a beam 92. As can be seen in Fig. 3B, the pre-manufactured spar cap 100 is an elongated element having an upper surface 101, a lower surface 102 (not visible), a first side surface 103, a second side surface 104 (not visible), a first end surface 105 and a second end surface 106 (not visible). The upper surface 101 and lower surface 102 are preferably arranged opposite each other and may have substantially the same size. In the same way, the first and second side surfaces 103, 104 may be arranged opposite each other and have substantially the same sizes, and the first and second end surfaces 105, 106 are arranged opposite each other and preferably have substantially the same sizes. However, since the shape of the spar cap 100 is set according to strength requirements, the thickness may change along the longitudinal direction of the spar cap 100, resulting in tapering sections at the sides and/or the ends (not visible in drawing). The pre-manufactured spar cap 100 comprises a plurality of elongated pultruded carbon elements 110 arranged in a stacked array. The plurality of pultrusion carbon elements 110 is separated by a number of interlayers 130 arranged to promote resin-infusion between the pultruded carbon elements.

In Fig. 3A, the stacked array of pultruded carbon elements 110 comprises three rows arranged adjacently, and each row comprises six pultruded carbon elements 110 arranged on top of each other. Five interlayers 130 are arranged between the pultruded carbon elements 110 arranged on top of each other, extending from the first to the third row of pultruded carbon elements 110.

In Fig. 3B, the stacked array of pultruded carbon elements 110 comprises three rows arranged adjacently, and each row comprises four pultruded carbon elements 110 arranged on top of each other. Three interlayers 130 are arranged between the pultruded carbon elements 110 arranged on top of each other, extending from the first to the third row of pultruded carbon elements 110.

The pre-manufactured spar cap 100 is preferably infused with vinyl ester resin or epoxy ester resin to maintain the pultruded carbon elements 110 in the stacked array. The pultruded carbon elements 110 are preferably elongated planks with a rectangular cross-section and made from carbon fibres in a cured resin. Alternatively, they may be hybrid pultrusion elements comprising a second type of reinforcement fibres, such as glass fibres. The interlayers 130 comprise fibre material, such as glass fibres, carbon fibres or polymeric fibres etc. for promoting resin flow between the pultruded carbon planks.

The sling 91 is an example of an element for lifting the spar cap 100 from the preparation table 90 to the blade mould 70. As can be seen, the sling 91 is arranged around the spar cap 100 and thus contacts the lower surface 102 of the spar cap 100, as well as the first and second side surfaces 103, 104 of the spar cap 100. This means that if a primer layer is applied to the lower surface 102 and/or side surfaces 103, 104 of the spar cap, the lifting of the spar cap from the preparation table 90 to the blade mould 70 may damage the applied primer layers. In reality, the pre-manufactured spar cap 100 is much longer than illustrated in Fig. 3B.

Fig. 3C is a schematic diagram illustrating a three-dimensional view of a part of a blade mould 70 for moulding a blade shell member, such as a suction side blade shell member or a pressure side blade shell member. Only a middle part of the blade mould 70 relative to a longitudinal direction 74 is illustrated, whereas the ends for moulding the tip and root of the blade shell member are not illustrated. The blade mould 70 comprises a spar cap region 73 extending along the longitudinal axis 74 of the blade mould. The spar cap region 73 is the region where the pre-manufactured spar cap 100 is to be arranged, i.e. the spar cap region 73 preferably has the same length and width as the lower surface 102 of the pre-manufactured spar cap 100.

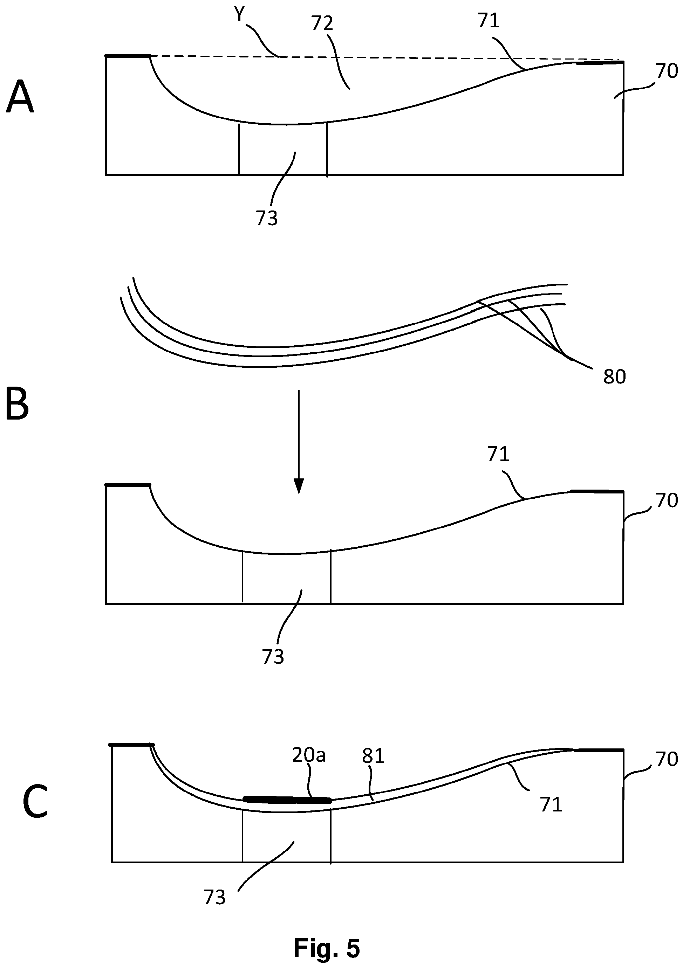

The blade mould 70 comprises a moulding surface 71 whereon the different materials for the blade shell member can be arranged. Furthermore, the blade mould 70 comprises a moulding cavity 72. The moulding cavity 72 is the space between the moulding surface 71 and a plane between which the different materials for the blade shell member may be arranged. The cavity 72 is illustrated in Fig. 5A.

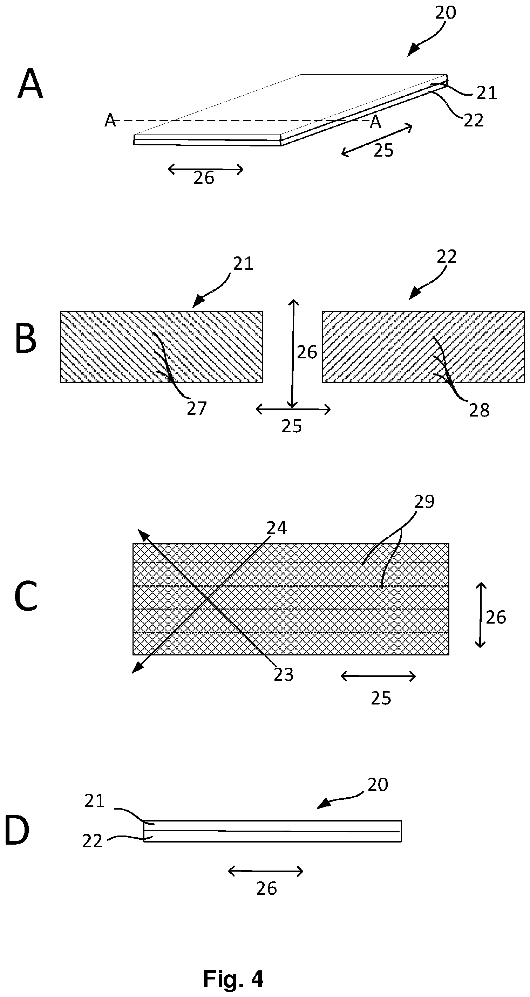

Fig. 4 is a schematic diagram illustrating different views of a pre-impregnated fibre sheet according to a preferred embodiment of the present invention.

Fig. 4A shows a pre-impregnated fibre sheet 20 extending in a longitudinal direction 25 and in a transverse direction 26 and comprising a first fibre layer 21 forming part of an upper surface of the pre-impregnated fibre sheet and a second fibre layer 22 forming part of a lower surface of the pre-impregnated fibre sheet 20. The first fibre layer 21 is pre-impregnated with an adhesion promoter (not visible), whereas the second fibre layer 22 is not.

Fig. 4B illustrates a top view of a first and second fibre layer 21, 22 arranged beside each other. The first fibre layer 21 comprises a first plurality of fibres 27 arranged along a first fibre direction 23, and the second fibre layer 22 comprises a second plurality of fibres 28 arranged along a second fibre direction 24.

Fig. 4C illustrates a top view of a pre-impregnated fibre sheet 20 made by arranging the first and second fibre sheets of Fig. 4B on top of each other. For illustrative purposes, the arrangement of the first plurality of fibres 27 and the second plurality of fibres 28 in the pre-impregnated fibre sheet 20 is shown. The plurality of first and second fibres 27, 28 are each arranged at a 45-degree angle relative to the longitudinal direction 25 of the pre-impregnated fibre sheet 20, and the fibre angle between the first and second fibre directions is 90 degrees.

The fibres 27, 28 are maintained relative to each other by a plurality of stitching rows 29 arranged along a first stitch direction between the first and second fibre directions. The stitching rows are illustrated by dotted lines extending along the longitudinal direction 25 of the pre-impregnated fibre sheet 20. In Fig. 4C, the first stitch direction is parallel with the longitudinal direction 25 of the pre-impregnated fibre sheet 20.

Fig. 4D is a cross-sectional view of the pre-impregnated fibre sheet through the line A-A in Fig. 4A.

Fig. 5A is a schematic diagram illustrating a cross-sectional view of the blade mould 70 of Fig. 3. The thick black lines illustrate substantially straight areas of the blade mould 70 between which a plane Y extends. The area between the plane Y and the moulding surface 71 is defined as the moulding cavity 72. Fig. 5A further illustrates the spar cap region 73, i.e. the region of the blade mould 70 where the spar cap 100 is to be arranged. The spar cap 100 is not to be arranged directly on the blade moulding surface 71 but in the area above the spar cap region 73 on fibre-reinforced layers 80.

Fig. 5B is a schematic diagram illustrating an arrangement of a number of fibre-reinforced layers 80 on the blade moulding surface 71 of the blade mould 70. In Fig. 5B, three fibre-reinforced layers 80 are arranged on top of each other, forming a thin outer shell 81 of the blade shell member, as illustrated in Fig. 5C. In reality, the outer shell 81 is much thinner than illustrated in Fig. 5C. However, for illustrative purposes, the outer shell 81 proportions are exaggerated. Furthermore, in reality, more than three fibre-reinforced layers 80 may be arranged on top of each other, but for an illustrative purpose, only three layers are shown.

Fig. 5C is a schematic diagram illustrating how a first pre-impregnated fibre sheet 20a may be arranged on top of the fibre-reinforced layers 80 in the blade mould 70. The first pre-impregnated fibre sheet 20 is shown as a thick black line for illustrative purposes. The first pre-impregnated fibre sheet 20 may be applied outside the spar cap region 73, i.e. covering an area larger than the spar cap region, or may only cover some parts of the spar cap region 73. However, preferably, the first pre-impregnated fibre sheet 20 or a plurality of first pre-impregnated sheets substantially covers the entire spar cap region. Alternatively, a primer layer could be applied instead of the first pre-impregnated fibre sheet 20.

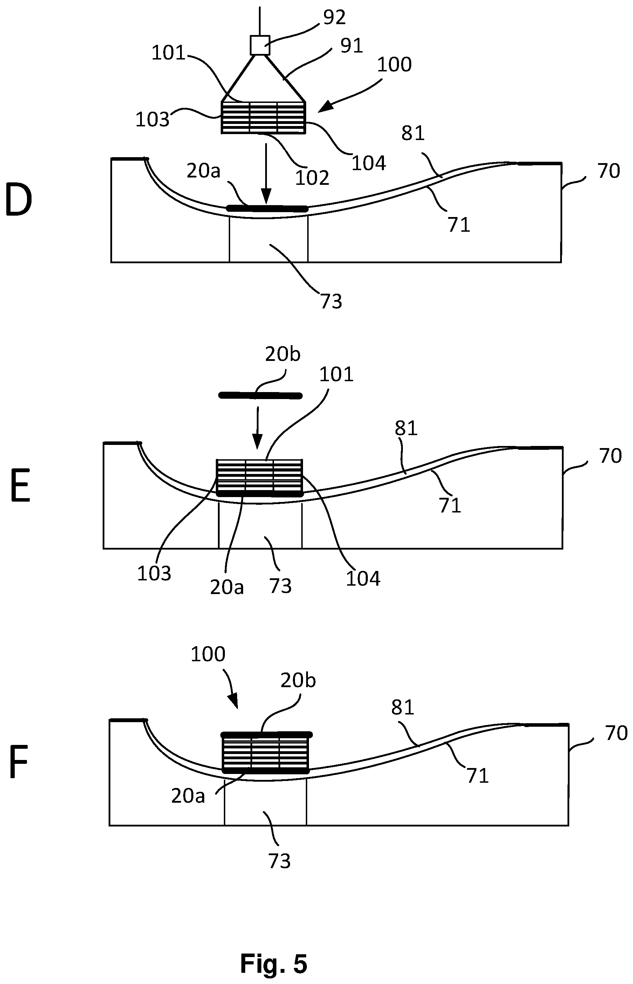

Figs. 5D-5F illustrate that in some embodiments, after the first pre-impregnated fibre sheet 20a has been arranged on the spar cap region 73 on top of the fibre-reinforced layers 80, the pre-manufactured spar cap may be arranged on the first pre-impregnated fibre sheet 20a before the second pre-impregnated fibre sheet 20b is arranged on the upper surface 101 of the pre-manufactured spar cap 100. Thus, the second pre-impregnated fibre sheet is arranged at the upper surface 101 of the pre-manufactured spar cap 100 after the pre-manufactured spar cap 100 has been arranged in the blade mould 70. A primer layer may be applied instead of the second pre-impregnated fibre sheet 20b.

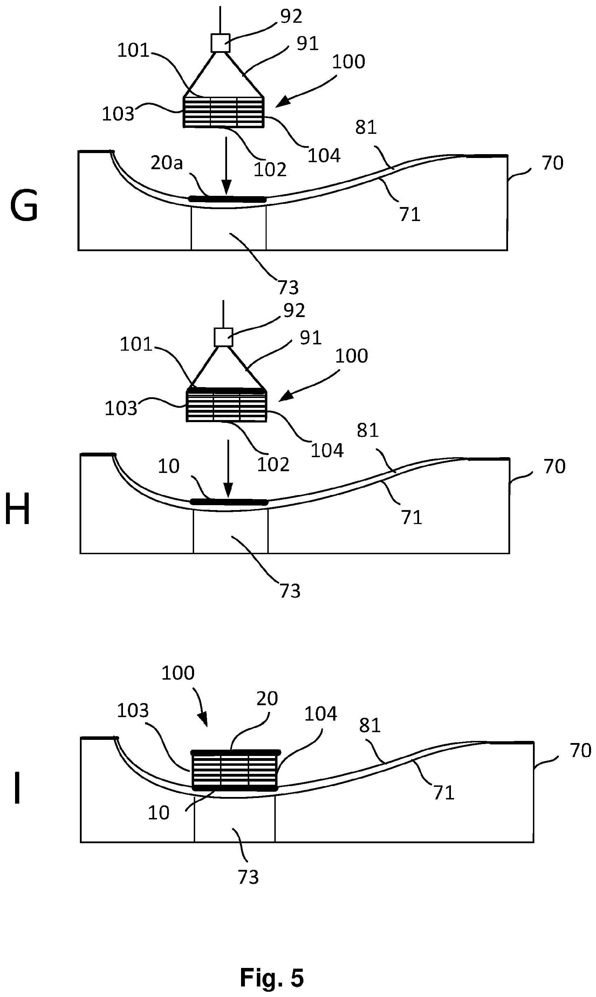

Figs. 5G-FI illustrate that in other embodiments, whereafter the first pre-impregnated fibre sheet 20a has been arranged on the spar cap region 73 on top of the fibre-reinforced layers 80, the second pre-impregnated fibre sheet 20b is arranged on the upper surface 101 of the pre-manufactured spar cap before it is arranged in the blade mould 70 and that only after arranging the second pre-impregnated fibre sheet 20b on the upper surface 101 of the pre-manufactured spar cap 100, the pre-manufactured spar cap 100 is lifted into the blade mould and arranged at the spar cap region 73. A primer layer may be applied instead of the second pre-impregnated fibre sheet 20b.

Furthermore, the side surfaces and/or end surfaces of the spar cap may also be covered by a pre-impregnated fibre sheet or a primer layer.

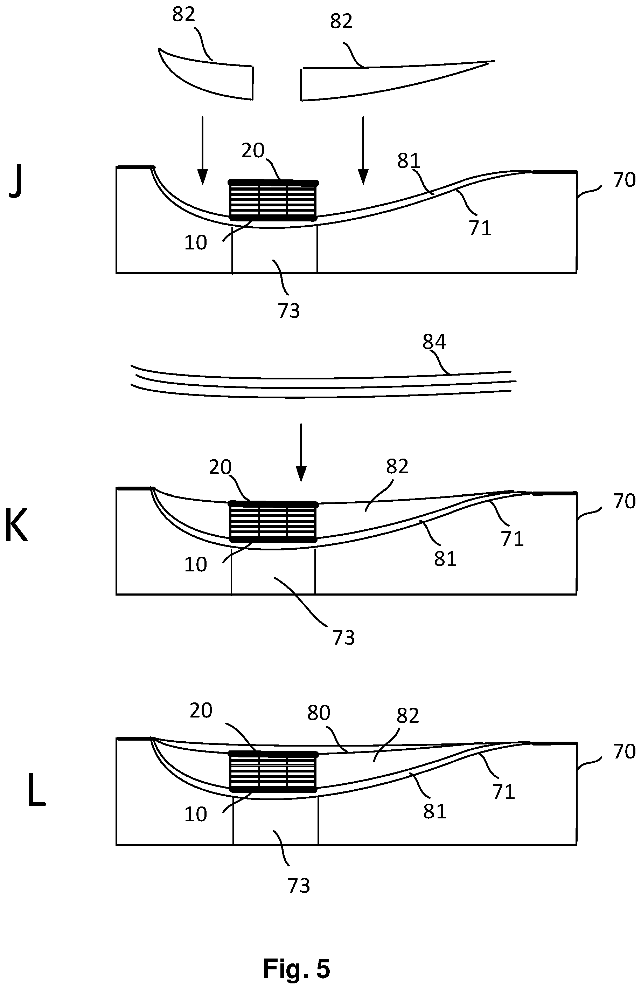

Figs. 5J-5K illustrate that after the second pre-impregnated sheet 20b has been arranged on the upper surface 101 of the pre-manufactured spar cap 100, independently of whether this was done in accordance with the embodiment illustrated in Figs. 5D-5F or 5G-FI, further elements 82, such as sandwich core layers, shear webs and further fibre-reinforced layers 83, may be arranged within the cavity of the blade mould 70. After arranging the desired elements within the cavity of the blade mould 70, the blade mould 70 can be infused with resin and cured to form a finished blade shell member. Infusion of the blade mould cavity with resin is preferably based on vacuum-assisted resin transfer moulding.

Figs. 5A-5K illustrate the manufacture of a pressure side shell part. It is recognised that a suction side shell part may be manufactured in a similar way. The two shell parts can subsequently be assembled to form a closed aerodynamic shell, e.g. with shear webs between the spar caps as illustrated in Fig. 2B.

It should be emphasised that the figures. are schematic only and that in particular the thickness of the different elements in Fig. 5 is exaggerated. Normally, the blade shell and spar cap are much thinner, e.g. as shown in Fig. 2B.

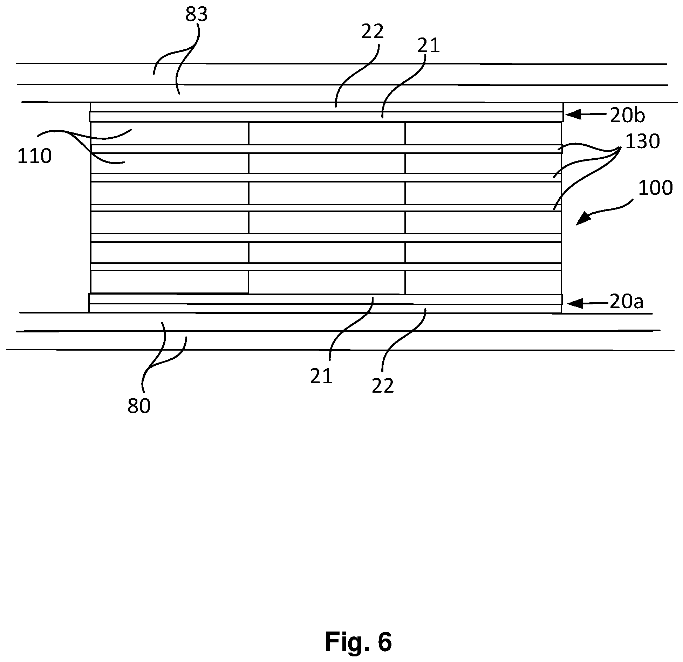

Fig. 6 is a schematic illustration illustrating a close-up view of Fig. 5L. As can be seen in Fig. 6, the interface between the spar cap 100 and the blade shell member parts, i.e. the fibre reinforced layers 80 and the further fibre reinforced layers 83, is covered by a first and a second pre-impregnated fibre sheet 20a, 20b. Preferably, the first and second pre-impregnated fibre sheets should be similar to those illustrated in Fig. 4. It can be seen from Fig. 6 that the first pre-impregnated fibre sheet 20a is arranged on top of the number of fibre-reinforced layers 80 of the spar cap region 73, such that the second fibre layer 22 contacts the spar cap region 73 and such that the first fibre layer 21 contacts the lower surface 102 of the spar cap 100. It can further be seen that the second pre-impregnated fibre sheet 20b is arranged on the upper surface 101 of the pre-manufactured spar cap 100, such that the upper surface 101 of the pre-manufactured spar cap 100 contacts the first fibre layer 21 of the second pre-impregnated fibre sheet 20a and such that the second fibre layer 22 contacts the further fibre-reinforced layers 83. Again, it should be emphasised that the figures are schematic only and that in particular the thicknesses of the different elements in Fig. 6 are not necessarily in the correct dimensions relative to each other.

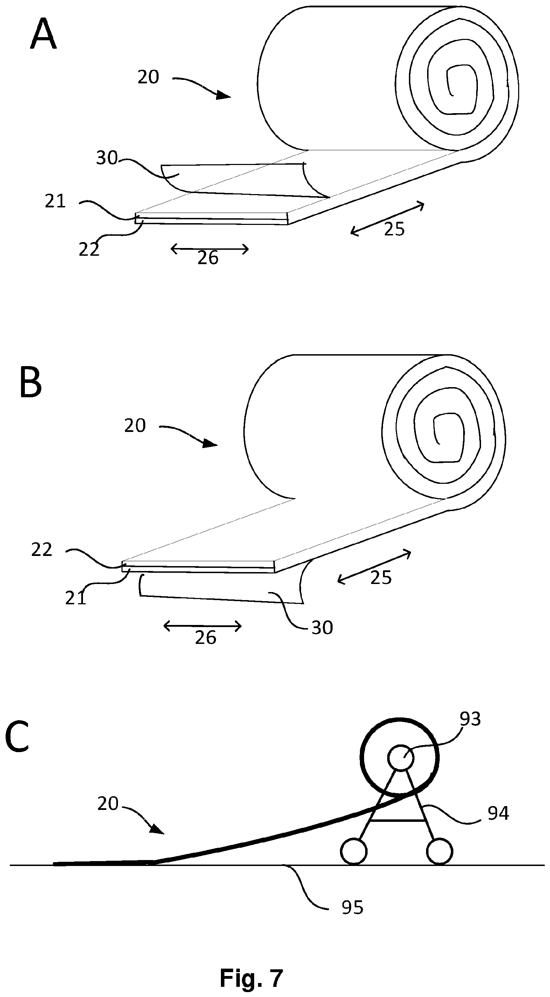

Figs. 7A and 7B are schematic illustrations showing how a pre-impregnated fibre sheet 20 may be provided in a rolled-up configuration. As can be seen, the upper surface of the pre-impregnated fibre sheet 20, i.e. the first fibre layer 21, is covered by a removable film 30, which can be removed when desired, either while rolling out the pre-impregnated fibre sheet 20 or after it has been rolled out.

The pre-impregnated fibre sheet 20 may be rolled up as illustrated in Fig. 7A or as in Fig. 7B. Whether the pre-impregnated fibre sheet 20 should be rolled up as shown in Fig. 7A or 7B depends on whether the pre-impregnated fibre sheet 20 are to be rolled out on the spar cap region 73 in the blade mould 70 or on the upper surface 101 of the pre-manufactured spar cap 100.

For a first pre-impregnated fibre sheet 20a configured to be rolled out on a spar cap region 73 in the blade mould 70, the pre-impregnated fibre sheet 20a is preferably rolled up as shown in Fig. 7A, such that the first fibre layer 21 faces upwards relative to the blade mould and the second fibre layer 22 is contacted with the spar cap region 73 of the blade mould, i.e. the fibre-reinforced layers 80 arranged at the spar cap region 73. In this case, the film 30 may be removed simultaneously with or after rolling out the pre-impregnated fibre sheet 20a.

For a second pre-impregnated fibre sheet 20b configured to be rolled out on the upper surface 101 of a spar cap 100, the pre-impregnated fibre sheet 20b is preferably rolled up as shown in Fig. 7B, such that the second fibre layer 22 faces upwards relative to the pre-manufactured spar cap 100 and such that the first fibre layer 21 is contacted with the upper surface 101 of the pre-manufactured spar cap 100. In this case, it may be necessary to remove the film 30 substantially simultaneously with rolling out the pre-impregnated fibre sheet 20b.

Fig. 7C is a schematic illustration showing that a pre-impregnated fibre sheet 20 provided in a rolled-up configuration may be rolled out along a surface, e.g. along the spar cap region 73 in the blade mould 70 or the upper surface 101 of the pre-manufactured spar cap 100. In Fig. 7C, the pre-impregnated fibre sheet 20 is arranged on a wheel 93, connected to a device 94. The wheel 93 can be rotated relative to the device 94 to facilitate rollout of the pre-impregnated fibre sheet 20. Furthermore, the device 94 itself may have wheels to allow the device to be moved along the surface 95, i.e. along the spar cap region 73 in the blade mould 70 or on the upper surface 101 of the pre-manufactured spar cap 100.

### LIST OF REFERENCE NUMERALS

- 20: pre-impregnated fibre sheet
- 21: first fibre layer
- 22: second fibre layer
- 23: first fibre direction
- 24: second fibre direction
- 25: longitudinal direction of fibre sheet
- 26: transverse direction of fibre sheet
- 27: first plurality of fibres
- 28: second plurality of fibres
- 29: stitching rows
- 30: film

- 70: blade mould
- 71: moulding surface
- 72: moulding cavity
- 73: spar cap region
- 74: longitudinal direction

- 80: fibre-reinforced layer
- 81: outer shell of wind turbine shell member
- 82: further elements, such as core elements and/or shear webs
- 83: further fibre-reinforced layers

- 90: preparation table
- 91: sling
- 92: beam
- 93: wheel
- 94: device
- 95: surface

- 100: pre-manufactured spar cap
- 101: upper surface of spar cap
- 102: lower surface of spar cap
- 103: first side surface of spar cap
- 104: second side surface of spar cap
- 105: first end surface of spar cap
- 106: second end surface of spar cap

- 110: pultruded carbon element
- 130: interlayers

- 200: wind turbine
- 400: tower
- 600: nacelle
- 800: hub
- 1000: blade
- 1400: blade tip
- 1600: blade root
- 1800: leading edge
- 2000: trailing edge
- 2200: pitch axis
- 2400: pressure side
- 2600: suction side
- 3000: root region
- 3200: transition region
- 3400: airfoil region
- 3800: chord line
- 4000: shoulder / position of maximum chord

## Claims

1. A blade shell member for a wind turbine blade comprising
a pre-manufactured spar cap (100),
a number of fibre-reinforced layers (80), and
a pre-impregnated fibre sheet (20),
the pre-impregnated fibre sheet extending in a longitudinal direction (25) and in a transverse direction (26) and comprising a first fibre layer (21) forming part of an upper surface of the pre-impregnated fibre sheet (20) and a second fibre layer (22) forming part of a lower surface of the pre-impregnated fibre sheet (20), wherein the first fibre layer (21) comprises a first plurality of fibres (27) arranged along a first fibre direction (23) and the second fibre layer (22) comprises a second plurality of fibres (28) arranged along a second fibre direction (24), wherein the arrangement of the first plurality of fibres (27) and the arrangement of the second plurality of fibres (28) are maintained in the pre-impregnated fibre sheet (20) relative to each other by a plurality of stitching rows (29) and wherein the first fibre layer (21) is pre-impregnated with an adhesion promoter,
wherein the pre-impregnated fibre sheet is arranged at an interface between the pre-manufactured spar cap and the number of fibre-reinforced layers (80) of the blade shell member, and
wherein the first fibre layer (21) comprising the adhesion promoter facilitates adhesion between the pre-manufactured spar cap and the pre-impregnated fibre sheet (20).

2. A blade shell member according to claim 1, wherein the second fibre layer (22) is not pre-impregnated with the adhesion promoter.

3. A blade shell member according to any of the preceding claims, wherein the adhesion promoter is compatible with polyester resin and/or epoxy ester resin and/or vinyl ester resin and/or wherein the adhesion promoter is a primer and/or the adhesion promoter is isocyanate based and/or silane based and/or acrylate based and/or urethane based.

4. A blade shell member according to any of the preceding claims, wherein the first and second fibre directions (23, 24) are different and wherein a fibre angle between the first and second fibre directions (23, 24) is between 40 degrees and 150 degrees, preferably 90 degrees.

5. A blade shell member according to any of the preceding claims, wherein the plurality of stitching rows (29) are parallel and arranged along a first stitch direction and wherein the first stitch direction is between the first and second fibre directions (23, 24), such as half the fibre angle from each of the first and second fibre directions (23, 24).

6. A blade shell member according to any of the preceding claims, wherein the first and/or second plurality of fibres (27, 28) comprises or essentially consists of glass fibres.

7. A method of manufacturing a blade shell member for a wind turbine blade (1000), comprising the steps of:
a) providing a blade mould (70) for the blade shell member, the blade mould (70) comprising a moulding surface (71) and a moulding cavity (72);
b) arranging a number of fibre-reinforced layers (80) on the blade moulding surface (71);
c) providing a number of pre-impregnated fibre sheets (20) each extending in a longitudinal direction (25) and in a transverse direction (26) and comprising a first fibre layer (21) forming part of an upper surface of the pre-impregnated fibre sheet (20) and a second fibre layer (22) forming part of a lower surface of the pre-impregnated fibre sheet (20), wherein the first fibre layer (21) comprises a first plurality of fibres (27) arranged along a first fibre direction (23) and the second fibre layer (22) comprises a second plurality of fibres (28) arranged along a second fibre direction (24), wherein the arrangement of the first plurality of fibres (27) and the arrangement of the second plurality of fibres (28) are maintained in the pre-impregnated fibre sheet (20) relative to each other by a plurality of stitching rows (29) and wherein the first fibre layer (21) is pre-impregnated with an adhesion promoter, wherein the number of pre-impregnated fibre sheets includes a first pre-impregnated fibre sheet (20a) and a second pre-impregnated fibre sheet (20b);
d) providing a pre-manufactured spar cap (100) having an upper surface (101), a lower surface (102) opposite the upper surface, a first side surface (103), a second side surface (104), a first end surface (105) and a second end surface (106);
e) arranging the pre-manufactured spar cap (100) at a spar cap region (73) on top of the fibre-reinforced layers (80);
f) infusing the blade moulding cavity (72) with resin; and
g) curing the resin to form the blade shell member;
wherein the method further comprises a step of arranging the first pre-impregnated fibre sheet (20a) on top of the number of fibre-reinforced layers (80) on at least part of the spar cap region (73) before step e), such that the second fibre layer (22) contacts the at least part of the spar cap region (73) and/or wherein the method further comprises the step of arranging the second pre-impregnated fibre sheet (20b) on at least part of the upper surface (101) of the pre-manufactured spar cap (100) before step f) and preferably after step e) and such that the upper surface (101) of the pre-manufactured spar cap (100) contacts the first fibre layer (21) of the second pre-impregnated fibre sheet (20b).

8. Method according to claim 7, wherein the method further comprises the step of applying a primer layer to at least part of the spar cap region (73) before step e) or applying a primer layer to at least part of the upper surface (101) of the pre-manufactured spar cap (100) before step f).

9. Method according to any of claims 7 or 8, wherein the method further comprises arranging further fibre-reinforced layers (83) in the blade mould (70), including arranging further fibre-reinforced layers (83) on top of the second pre-impregnated sheet (20b), before step f) and after step e), such that the further fibre-reinforced layers (83) are contacted with the second fibre layer (22) of the second pre-impregnated sheet (20b).

10. Method according to any of claims 7-9, wherein providing the pre-manufactured spar cap (100) comprises the steps of:
c1) providing a plurality of pultruded carbon elements (110) and a number of interlayers (130) comprising fibre material for promoting resin flow between the pultruded carbon elements (110);
c2) arranging the plurality of pultruded carbon elements (110) in a stacked array, wherein the plurality of pultruded carbon elements (110) is separated by the number of interlayers (130); and
c5) infusing the plurality of pultruded carbon elements (110) with resin and curing to provide the pre-manufactured spar cap (100).

11. Method according to any of claims 7-10, wherein the pre-manufactured spar cap (100) is infused with vinyl ester or epoxy ester resin and wherein the blade mould cavity (73) is infused with polyester resin.

12. Method according to any of claims 7-11, wherein the number of fibre-reinforced layers (80) and/or further fibre-reinforced layers (83) comprises glass fibres and/or carbon fibres and/or wherein the number of fibre-reinforced layers (80) and/or further fibre-reinforced layers (83) comprises unidirectional layers and/or biaxial layers and/or triaxial layers.

13. Blade shell member for a wind turbine blade (1000) obtainable by the method of any of claims 7-12.

14. Wind turbine blade (1000) obtainable by manufacturing a pressure side shell half and a suction side shell half over substantially the entire length of the wind turbine blade in accordance with any of claims 7-12 and subsequently closing and joining the shell halves for obtaining a closed shell.

## Patentansprüche

1. Blattschalenelement für ein Windturbinenblatt, umfassend ein vorgefertigter Holmgurt (100),
eine Anzahl von faserverstärkten Schichten (80), und
eine vorimprägnierte Faserplatte (20),
wobei sich die vorimprägnierte Faserplatte in Längsrichtung (25) und in Querrichtung (26) erstreckt und eine erste Faserschicht (21), die einen Teil der oberen Fläche der vorimprägnierten Faserplatte (20) bildet, und eine zweite Faserschicht (22), die einen Teil der unteren Fläche der vorimprägnierten Faserplatte (20) bildet, umfasst, wobei die erste Faserschicht (21) eine erste Vielzahl von Fasern (27) umfasst, die entlang einer ersten Faserrichtung (23) angeordnet sind, und die zweite Faserschicht (22) eine zweite Vielzahl von Fasern (28) umfasst, die entlang einer zweiten Faserrichtung (24) angeordnet sind, wobei die Anordnung der ersten Vielzahl von Fasern (27) und die Anordnung der zweiten Vielzahl von Fasern (28) in der vorimprägnierten Faserplatte (20) relativ zueinander durch eine Vielzahl von Nahtreihen (29) aufrechterhalten werden und wobei die erste Faserschicht (21) mit einem Haftvermittler vorimprägniert ist,
wobei die vorimprägnierte Faserplatte an einer Grenzfläche zwischen dem vorgefertigten Holmgurt und der Anzahl faserverstärkter Schichten (80) des Blattschalenelements angeordnet ist, und
wobei die erste Faserschicht (21), die den Haftvermittler umfasst, die Haftung zwischen dem vorgefertigten Holmgurt und der vorimprägnierten Faserplatte (20) erleichtert.

2. Blattschalenelement nach Anspruch 1, wobei die zweite Faserschicht (22) nicht mit dem Haftvermittler vorimprägniert ist.

3. Blattschalenelement nach einem der vorstehenden Ansprüche, wobei der Haftvermittler mit Polyesterharz und/oder Epoxyesterharz und/oder Vinylesterharz kompatibel ist und/oder wobei der Haftvermittler eine Grundierung ist und/oder der Haftvermittler auf Isocyanat und/oder Silan und/oder Acrylat und/oder Urethan basiert.

4. Blattschalenelement nach einem der vorstehenden Ansprüche, wobei die erste und zweite Faserrichtung (23, 24) unterschiedlich sind und wobei ein Faserwinkel zwischen der ersten und zweiten Faserrichtung (23, 24) zwischen 40 Grad und 150 Grad, vorzugsweise 90 Grad, liegt.

5. Blattschalenelement nach einem der vorstehenden Ansprüche, wobei die Vielzahl von Nahtreihen (29) parallel und entlang einer ersten Nahtrichtung angeordnet sind und wobei die erste Nahtrichtung zwischen der ersten und zweiten Faserrichtung (23, 24) liegt, beispielsweise in der Mitte des Faserwinkels zwischen jeder der ersten und zweiten Faserrichtungen (23, 24).

6. Blattschalenelement nach einem der vorstehenden Ansprüche, wobei die erste und/oder zweite Vielzahl von Fasern (27, 28) Glasfasern umfasst oder im Wesentlichen aus Glasfasern besteht.

7. Verfahren zur Herstellung eines Blattschalenelements für ein Windturbinenblatt (1000), das die folgenden Schritte umfasst:
a) Bereitstellen einer Blattform (70) für das Blattschalenelement, wobei die Blattform (70) eine Formfläche (71) und einen Formhohlraum (72) umfasst;
b) Anordnen einer Anzahl von faserverstärkten Schichten (80) auf der Blattformfläche (71);
c) Bereitstellen einer Anzahl von vorimprägnierten Faserplatten (20), die sich jeweils in Längsrichtung (25) und in Querrichtung (26) erstrecken und eine erste Faserschicht (21), die einen Teil der oberen Fläche der vorimprägnierten Faserplatte (20) bildet, und eine zweite Faserschicht (22), die einen Teil der unteren Fläche der vorimprägnierten Faserplatte (20) bildet, umfassen, wobei die erste Faserschicht (21) eine erste Vielzahl von Fasern (27) umfasst, die entlang einer ersten Faserrichtung (23) angeordnet sind, und die zweite Faserschicht (22) eine zweite Vielzahl von Fasern (28) umfasst, die entlang einer zweiten Faserrichtung (24) angeordnet sind, wobei die Anordnung der ersten Vielzahl von Fasern (27) und die Anordnung der zweiten Vielzahl von Fasern (28) in der vorimprägnierten Faserplatte (20) relativ zueinander durch eine Vielzahl von Nahtreihen (29) aufrechterhalten werden und wobei die erste Faserschicht (21) mit einem Haftvermittler vorimprägniert ist, wobei die Anzahl der vorimprägnierten Faserplatten eine erste vorimprägnierte Faserplatte (20a) und eine zweite vorimprägnierte Faserplatte (20b) einschließt;
d) Bereitstellen eines vorgefertigten Holmgurts (100) der eine obere Fläche (101), eine untere Fläche (102) gegenüber der oberen Fläche, eine erste Seitenfläche (103), eine zweite Seitenfläche (104), eine erste Endfläche (105) und eine zweite Endfläche (106) aufweist;
e) Anordnen des vorgefertigten Holmgurts (100) an einem Holmgurt-Bereich (73) auf den faserverstärkten Schichten (80);
f) Infundieren des Blattformhohlraums (72) mit Harz; und
g) Aushärten des Harzes, um das Blattschalenelement zu bilden;
wobei das Verfahren weiter einen Schritt des Anordnens der ersten vorimprägnierten Faserplatte (20a) auf der Anzahl von faserverstärkten Schichten (80) auf mindestens einem Teil des Holmgurt-Bereichs (73) vor dem Schritt e) umfasst, sodass die zweite Faserschicht (22) den mindestens einen Teil des Holmgurt-Bereichs (73) berührt, und/oder wobei das Verfahren weiter den Schritt des Anordnens der zweiten vorimprägnierten Faserplatte (20b) auf mindestens einem Teil der oberen Fläche (101) des vorgefertigten Holmgurts (100) vor dem Schritt f) und vorzugsweise nach dem Schritt e) umfasst und derart, dass die obere Fläche (101) des vorgefertigten Holmgurts (100) die erste Faserschicht (21) der zweiten vorimprägnierten Faserplatte (20b) berührt.

8. Verfahren nach Anspruch 7, wobei das Verfahren weiter den Schritt des Auftragens einer Grundierungsschicht auf mindestens einen Teil des Holmgurt-Bereichs (73) vor dem Schritt e) oder das Auftragen einer Grundierungsschicht auf mindestens einen Teil der oberen Fläche (101) des vorgefertigten Holmgurts (100) vor dem Schritt f) umfasst.

9. Verfahren nach einem der Ansprüche 7 oder 8, wobei das Verfahren weiter das Anordnen weiterer faserverstärkter Schichten (83) in der Blattform (70) umfasst, einschließlich des Anordnens weiterer faserverstärkter Schichten (83) auf der zweiten vorimprägnierten Platte (20b), vor dem Schritt f) und nach dem Schritt e), sodass sich die weiteren faserverstärkten Schichten (83) mit der zweiten Faserschicht (22) der zweiten vorimprägnierten Platte (20b) berühren.

10. Verfahren nach einem der Ansprüche 7 bis 9, wobei das Bereitstellen des vorgefertigten Holmgurts (100) die folgenden Schritte umfasst:
c1) Bereitstellen einer Vielzahl von pultrudierten Kohlenstoffelementen (110) und einer Anzahl von Zwischenschichten (130), die ein Fasermaterial zur Förderung des Harzflusses zwischen den pultrudierten Kohlenstoffelementen (110) umfassen;
c2) Anordnen der Vielzahl von pultrudierten Kohlenstoffelementen (110) in einer gestapelten Anordnung, wobei die Vielzahl von pultrudierten Kohlenstoffelementen (110) durch die Anzahl der Zwischenschichten (130) getrennt ist; und
c5) Infundieren der Vielzahl von pultrudierten Kohlenstoffelementen (110) mit Harz und Aushärten, um den vorgefertigten Holmgurt (100) bereitzustellen.

11. Verfahren nach einem der Ansprüche 7 bis 10, wobei der vorgefertigte Holmgurt (100) mit Vinylester- oder Epoxyesterharz infundiert ist und wobei der Blattformhohlraum (73) mit Polyesterharz infundiert ist.

12. Verfahren nach einem der Ansprüche 7 bis 11, wobei die Anzahl der faserverstärkten Schichten (80) und/oder weiteren faserverstärkten Schichten (83) Glasfasern und/oder Kohlenstofffasern umfasst und/oder wobei die Anzahl der faserverstärkten Schichten (80) und/oder weiteren faserverstärkten Schichten (83) unidirektionale Schichten und/oder biaxiale Schichten und/oder triaxiale Schichten umfasst.

13. Blattschalenelement für ein Windturbinenblatt (1000), das durch das Verfahren nach einem der Anprüche 7 bis 12 erhältlich ist.

14. Windturbinenblatt (1000), das erhältlich ist, indem eine Druckseiten-Schalenhälfte und eine Saugseiten-Schalenhälfte über im Wesentlichen die gesamte Länge des Windturbinenblatts nach einem der Ansprüche 7 bis 12 hergestellt werden und anschließend die Schalenhälften geschlossen und verbunden werden, um eine geschlossene Schale zu erhalten.

## Revendications

1. Élément de coque de pale destiné à une pale d'éolienne comprenant
une semelle de longeron préfabriquée (100),
un nombre de couches renforcées par des fibres (80), et
une feuille de fibres préimprégnées (20),
la feuille de fibres préimprégnées s'étendant dans une direction longitudinale (25) et dans une direction transversale (26) et comprenant une première couche de fibres (21) faisant partie d'une surface supérieure de la feuille de fibres préimprégnées (20) et une seconde couche de fibres (22) faisant partie d'une surface inférieure de la feuille de fibres préimprégnées (20), dans lequel la première couche de fibres (21) comprend une première pluralité de fibres (27) agencées le long d'une première direction de fibres (23) et la seconde couche de fibres (22) comprend une seconde pluralité de fibres (28) agencées le long d'une seconde direction de fibres (24), dans lequel l'agencement de la première pluralité de fibres (27) et l'agencement de la seconde pluralité de fibres (28) sont maintenus dans la feuille de fibres préimprégnées (20) l'un par rapport à l'autre par une pluralité de rangées de piqûres (29) et dans lequel la première couche de fibres (21) est préimprégnée avec un promoteur d'adhérence,
dans lequel la feuille de fibres préimprégnées est agencée au niveau d'une interface entre la semelle de longeron préfabriquée et le nombre de couches renforcées par des fibres (80) de l'élément de coque de pale, et
dans lequel la première couche de fibres (21) comprenant le promoteur d'adhérence facilite une adhésion entre la semelle de longeron préfabriquée et la feuille de fibres préimprégnées (20).

2. Élément de coque de pale selon la revendication 1, dans lequel la seconde couche de fibres (22) n'est pas préimprégnée avec le promoteur d'adhérence.

3. Élément de coque de pale selon l'une quelconque des revendications précédentes, dans lequel le promoteur d'adhérence est compatible avec une résine de polyester et/ou une résine époxyester et/ou une résine vinylester et/ou dans lequel le promoteur d'adhérence est un apprêt et/ou le promoteur d'adhérence est à base d'isocyanate et/ou à base de silane et/ou à base d'acrylate et/ou à base d'uréthane.

4. Élément de coque de pale selon l'une quelconque des revendications précédentes, dans lequel les première et seconde directions de fibres (23, 24) sont différentes et dans lequel un angle de fibre entre les première et seconde directions de fibres (23, 24) sont comprises entre 40 degrés et 150 degrés, de préférence 90 degrés.

5. Élément de coque de pale selon l'une quelconque des revendications précédentes, dans lequel la pluralité de rangées de piqûres (29) sont parallèles et agencées le long d'une première direction de piqûre et dans lequel la première direction de piqûre est située entre les première et seconde directions de fibres (23, 24), par exemple la moitié de l'angle de fibre à partir de chacune des première et seconde directions de fibres (23, 24).

6. Élément de coque de pale selon l'une quelconque des revendications précédentes, dans lequel les première et/ou seconde pluralités de fibres (27, 28) comprennent ou consistent essentiellement en des fibres de verre.

7. Procédé de fabrication d'un élément de coque de pale destiné à une pale d'éolienne (1000), comprenant les étapes suivantes :
a) la fourniture d'un moule de pale (70) destiné à l'élément de coque de pale, le moule de pale (70) comprenant une surface de moulage (71) et une cavité de moulage (72) ;
b) l'agencement d'un nombre de couches renforcées par des fibres (80) sur la surface de moulage de pale (71) ;
c) la fourniture d'un nombre de feuilles de fibres préimprégnées (20) s'étendant chacune dans une direction longitudinale (25) et dans une direction transversale (26) et comprenant une première couche de fibres (21) faisant partie d'une surface supérieure de la feuille de fibres préimprégnées (20) et une seconde couche de fibres (22) faisant partie d'une surface inférieure de la feuille de fibres préimprégnées (20), dans lequel la première couche de fibres (21) comprend une première pluralité de fibres (27) agencées le long d'une première direction de fibres (23) et la seconde couche de fibres (22) comprend une seconde pluralité de fibres (28) agencées le long d'une seconde direction de fibres (24),
dans lequel l'agencement de la première pluralité de fibres (27) et l'agencement de la seconde pluralité de fibres (28) sont maintenus dans la feuille de fibres préimprégnées (20) l'un par rapport à l'autre par une pluralité de rangées de piqûres (29) et dans lequel la première couche de fibres (21) est préimprégnée avec un promoteur d'adhérence, dans lequel le nombre de feuilles de fibres préimprégnées inclut une première feuille de fibres préimprégnées (20a) et une seconde feuille de fibres préimprégnées (20b) ;
d) la fourniture d'une semelle de longeron préfabriquée (100) présentant une surface supérieure (101), une surface inférieure (102) opposée à la surface supérieure, une première surface latérale (103), une seconde surface latérale (104), une première surface d'extrémité (105) et une seconde surface d'extrémité (106) ;
e) l'agencement de la semelle de longeron préfabriquée (100) au niveau d'une zone de semelle de longeron (73) au-dessus des couches renforcées par des fibres (80) ;
f) l'imprégnation de la cavité de moulage de pale (72) avec une résine ; et
g) le durcissement de la résine pour former l'élément de coque de pale ;
dans lequel le procédé comprend en outre une étape d'agencement de la première feuille de fibres préimprégnées (20a) au-dessus du nombre de couches renforcées par des fibres (80) sur au moins une partie de la zone de semelle de longeron (73) avant l'étape e), de telle sorte que la seconde couche de fibres (22) entre en contact avec l'au moins une partie de la zone de semelle de longeron (73) et/ou dans lequel le procédé comprend en outre l'étape d'agencement de la seconde feuille de fibres préimprégnées (20b) sur au moins une partie de la surface supérieure (101) de la semelle de longeron préfabriquée (100) avant l'étape f) et de préférence après l'étape e) et de telle sorte que la surface supérieure (101) de la semelle de longeron préfabriquée (100) entre en contact avec la première couche de fibres (21) de la seconde feuille de fibres préimprégnées (20b).

8. Procédé selon la revendication 7, dans lequel le procédé comprend en outre l'étape d'application d'une couche d'apprêt sur au moins une partie de la zone de semelle de longeron (73) avant l'étape e) ou d'application d'une couche d'apprêt sur au moins une partie de la surface supérieure (101) de la semelle de longeron préfabriquée (100) avant l'étape f).

9. Procédé selon l'une quelconque des revendications 7 ou 8, dans lequel le procédé comprend en outre l'agencement de couches renforcées par des fibres (83) supplémentaires dans le moule de pale (70), incluant l'agencement de couches renforcées par des fibres (83) supplémentaires sur le dessus de la seconde feuille préimprégnée (20b), avant l'étape f) et après l'étape e), de telle sorte que les couches renforcées par des fibres (83) supplémentaires sont mises en contact avec la seconde couche de fibres (22) de la seconde feuille préimprégnée (20b).

10. Procédé selon l'une quelconque des revendications 7 à 9, dans lequel la fourniture de la semelle de longeron préfabriquée (100) comprend les étapes suivantes :
c1) la fourniture d'une pluralité d'éléments en carbone pultrudés (110) et d'un nombre d'intercouches (130) comprenant un matériau en fibre destiné à favoriser un écoulement de résine entre les éléments en carbone pultrudés (110) ;
c2) l'agencement de la pluralité d'éléments en carbone pultrudés (110) dans un réseau empilé, dans lequel la pluralité d'éléments en carbone pultrudé (110) sont séparés par le nombre d'intercouches (130) ; et
c5) l'imprégnation de la pluralité d'éléments en carbone pultrudés (110) avec une résine et leur durcissement pour fournir la semelle de longeron préfabriquée (100).

11. Procédé selon l'une quelconque des revendications 7 à 10, dans lequel la semelle de longeron préfabriquée (100) est imprégnée de résine vinylester ou de résine époxyester et dans lequel la cavité de moule de pale (73) est imprégnée avec une résine de polyester.

12. Procédé selon l'une quelconque des revendications 7 à 11, dans lequel le nombre de couches renforcées par des fibres (80) et/ou de couches renforcées par des fibres (83) supplémentaires comprennent des fibres de verre et/ou des fibres de carbone et/ou dans lequel le nombre de couches renforcées par des fibres (80) et/ou de couches renforcées par des fibres (83) supplémentaires comprennent des couches unidirectionnelles et/ou des couches biaxiales et/ou des couches triaxiales.

13. Élément de coque de pale destiné à une pale d'éolienne (1000) pouvant être obtenu par le procédé selon l'une quelconque des revendications 7 à 12.

14. Pale d'éolienne (1000) pouvant être obtenue en fabriquant une demi-coque côté pression et une demi-coque côté aspiration sur sensiblement toute la longueur de la pale d'éolienne conformément à l'une quelconque des revendications 7 à 12 et ensuite en fermant et en assemblant les demi-coques pour obtenir une coque fermée.
